# EUROPEAN PATENT APPLICATION

(11) **EP 3 248 760 A1**
(43) Date of publication of application: **29.11.2017**
(21) Application number: 16825689.9
(22) Date of filing: 25.03.2016
(51) Int. Cl.: B29C 67/00, B33Y 30/00

(54) **THREE-DIMENSIONAL ADDITIVE FABRICATION DEVICE, METHOD FOR CONTROLLING THREE-DIMENSIONAL ADDITIVE FABRICATION DEVICE, AND PROGRAM FOR CONTROLLING THREE-DIMENSIONAL ADDITIVE FABRICATION DEVICE**

(71) Applicant: Technology Research Association for Future Additive Manufacturing, Tokyo 103-0027 (JP)
(72) Inventor: YAMADA, Masahiro, Akishima-shi Tokyo 196-8558 (JP); KATAOKA, Takayuki, Tokyo 103-0027 (JP)
(74) Representative: TBK
(86) International application number: PCT/JP2016/059645
(87) International publication number: WO 2017/163405

(57) **Abstract**

This invention effectively suppresses a decrease in shaping accuracy based on a difference in thermal expansion coefficient between a three-dimensional laminated and shaped object and shaping plate. A three-dimensional laminating and shaping apparatus includes a linear funnel that recoats the material of a three-dimensional laminated and shaped object. The three-dimensional laminating and shaping apparatus also includes an electron gun that generates an electron beam. The three-dimensional laminating and shaping apparatus further includes a shaping base material on which the three-dimensional laminated and shaped object is to be shaped. The thermal expansion coefficients of the shaping base material and three-dimensional laminated and shaped object are equal or have a difference not more than a predetermined value.

## Description

### TECHNICAL FIELD

The present invention relates to a three-dimensional laminating and shaping apparatus, a three-dimensional laminating and shaping apparatus control method, and a three-dimensional laminating and shaping apparatus control program.

### BACKGROUND ART

In the abovementioned technical field, patent literature 1 has disclosed a technique which sets the Young's modulus of a shaping plate at 150 to 800 GPa.

### CITATION LIST

### PATENT LITERATURE

Patent literature 1: Japanese Patent No. 5302710

### SUMMARY OF THE INVENTION

### TECHNICAL PROBLEM

Unfortunately, this technique described in the abovementioned literature cannot effectively suppress a decrease in shaping accuracy based on a difference between the thermal expansion coefficients of a three-dimensional laminated and shaped object and the shaping plate.

The present invention enables to provide a technique of solving the above-described problem.

### SOLUTION TO PROBLEM

One aspect of the present invention provides a three-dimensional laminating and shaping apparatus comprising:
a material recoater that recoats a material of a three-dimensional laminated and shaped object;
an electron gun that generates an electron beam; and
a shaping base material on which the three-dimensional laminated and shaped object is to be shaped,
wherein thermal expansion coefficients of the shaping base material and the three-dimensional laminated and shaped object are equal or have a difference not more than a predetermined value.

Another aspect of the present invention provides a three-dimensional laminating and shaping apparatus control method comprising:
causing a material recoater to recoat a material of a three-dimensional laminated and shaped object; and
causing an electron gun to generate an electron beam, thereby shaping the three-dimensional laminated and shaped object on a shaping base material,
wherein thermal expansion coefficients of the shaping base material and the three-dimensional laminated and shaped object are equal or have a difference not more than a predetermined value.

Still another aspect of the present invention provides a three-dimensional laminating and shaping apparatus control program for causing a computer to execute a method, comprising:
causing a material recoater to recoat a material of a three-dimensional laminated and shaped object; and
causing an electron gun to generate an electron beam, thereby shaping the three-dimensional laminated and shaped object on a shaping base material,
wherein thermal expansion coefficients of the shaping base material and the three-dimensional laminated and shaped object are equal or have a difference not more than a predetermined value.

### ADVANTAGEOUS EFFECTS OF INVENTION

The present invention can effectively suppress a decrease in shaping accuracy based on a difference between the thermal expansion coefficients of a three-dimensional laminated and shaped object and shaping plate.

### BRIEF DESCRIPTION OF DRAWINGS

Fig. 1 is view showing the arrangement of a three-dimensional laminating and shaping apparatus according to the first embodiment of the present invention;
Fig. 2 is a view for explaining a three-dimensional laminated and shaped object to be shaped by the three-dimensional laminating and shaping apparatus according to the first embodiment of the present invention;
Fig. 3 is a flowchart for explaining the procedure of the three-dimensional laminating and shaping apparatus according to the first embodiment of the present invention;
Fig. 4 is a view for explaining a three-dimensional laminated and shaped object to be shaped by a three-dimensional laminating and shaping apparatus according to the technical premise of the three-dimensional laminating and shaping apparatus according to the first embodiment of the present invention;
Fig. 5 is a view for explaining a three-dimensional laminated and shaped object to be shaped by a three-dimensional laminating and shaping apparatus according to the second embodiment of the present invention;
Fig. 6 is a view for explaining a three-dimensional laminated and shaped object to be shaped by a three-dimensional laminating and shaping apparatus according to the third embodiment of the present invention; and
Fig. 7 is a view for explaining a three-dimensional laminated and shaped object to be shaped by a three-dimensional laminating and shaping apparatus according to the fourth embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

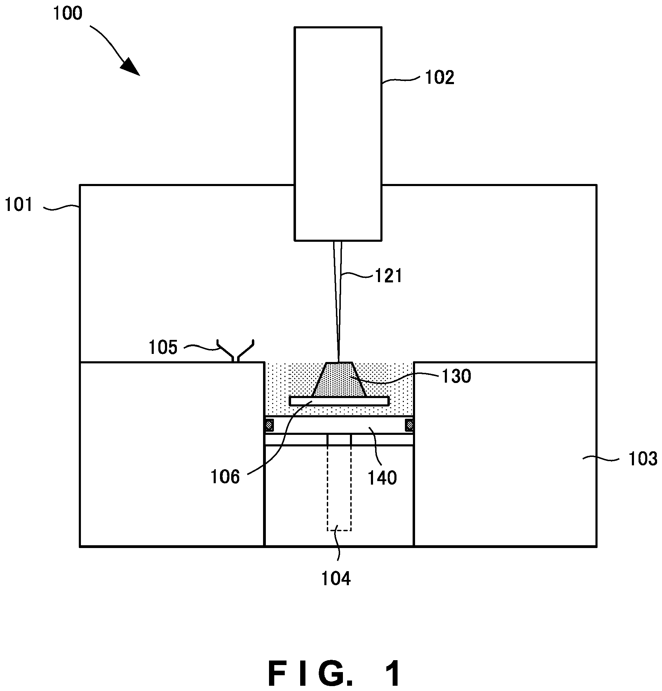

A three-dimensional laminating and shaping apparatus 100 as the first embodiment of the present invention will be explained with reference to Figs. 1 to 4.

### <Technical Premise>

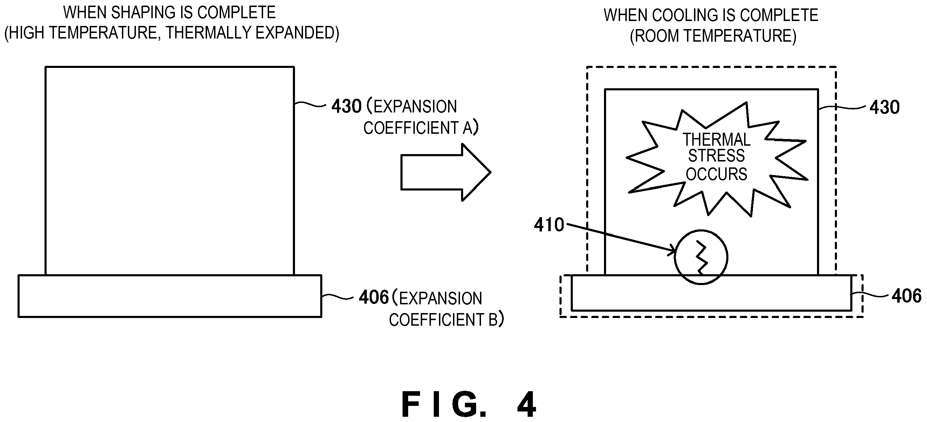

Fig. 4 is a view for explaining a three-dimensional laminated and shaped object to be shaped by a three-dimensional laminating and shaping apparatus according to the technical premise of the three-dimensional laminating and shaping apparatus according to this embodiment.

When shaping is complete, a three-dimensional laminated and shaped object 430 is at a high temperature and expanded due to heat given by an electron beam. When the three-dimensional laminated and shaped object 430 is cooled after the completion of shaping, the three-dimensional laminated and shaped object 430 shrinks as cooling advances. During this shrinkage, however, thermal stress occurs, and a defect 410 forms in the three-dimensional laminated and shaped object 430, or the shape of the three-dimensional laminated and shaped object 430 warps, so the shaping accuracy decreases.

In the process of this shrinkage, if a thermal expansion coefficient A of the three-dimensional laminated and shaped object 430 is larger than a thermal expansion coefficient B of a shaping plate (base plate) 406, thermal stress occurs in the three-dimensional laminated and shaped object 430, and the defect 410 or the like forms in the three-dimensional laminated and shaped object 430, so the shaping accuracy decreases. That is, since the thermal expansion coefficient of the shaping plate 406 is smaller than that of the three-dimensional laminated and shaped object 430, a force which pulls the three-dimensional laminated and shaped object 430 acts on it, and the defect 410 forms in the three-dimensional laminated and shaped object 430.

### <Technique of This Embodiment>

Fig. 1 is a view showing the arrangement of the three-dimensional laminating and shaping apparatus according to this embodiment. The three-dimensional laminating and shaping apparatus 100 includes a vacuum vessel 101, an electron gun 102, a shaping frame table 103, a Z-axis driving mechanism 104, a linear funnel 105, and a shaping plate 106. Note that in the following explanation, the three-dimensional laminating and shaping apparatus 100 is a powder bed type apparatus.

The three-dimensional laminating and shaping apparatus 100 sets the upper surface of the shaping plate 106 at almost the same height as that of the upper surface of the shaping frame table 103. Then, the three-dimensional laminating and shaping apparatus 100 spreads the material of a three-dimensional laminated and shaped object 130 on the shaping plate 106 (on a base plate) by the liner funnel 105 as a material recoater filled with the material. The three-dimensional laminating and shaping apparatus 100 irradiates the spread material with an electron beam 121 generated by the electron gun 102, thereby melting the material, solidifying the material, and completing laminating of the material of one layer. Note that the material of the shaping plate 106 is typically stainless steel, but is not limited to this.

When laminating of one layer is complete, the three-dimensional laminating and shaping apparatus 100 moves down a shaping table 140 by a height corresponding to the height of one layer by the Z-axis driving mechanism 104, and spreads the material of the next layer by the linear funnel 105. After spreading the material, the three-dimensional laminating and shaping apparatus 100 irradiates the material with the electron beam 121, thereby melting the material, solidifying the material, and completing laminating of the material of the next one layer. The three-dimensional laminating and shaping apparatus 100 shapes a desired three-dimensional laminated and shaped object in the vacuum vessel 101 by repeating this operation.

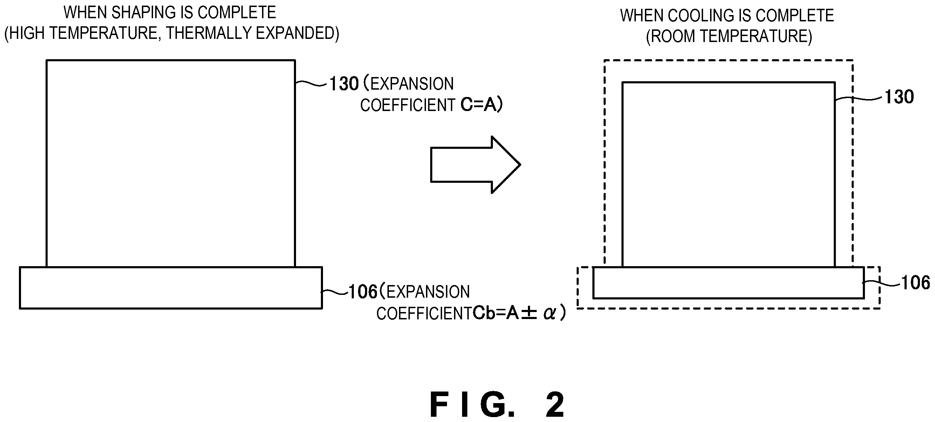

Fig. 2 is a view for explaining the three-dimensional laminated and shaped object to be shaped by the three-dimensional laminating and shaping apparatus according to this embodiment. The three-dimensional laminated and shaped object 130 is shaped on the shaping plate 106 as a shaping base material. When shaping is complete, the three-dimensional laminated and shaped object 130 is at a high temperature and thermally expanded due to heat (energy) given by the electron beam 121. In this case, the thermal expansion coefficient (Cb) of the shaping plate 106 and the thermal expansion coefficient (C) of the three-dimensional laminated and shaped object 130 are set such that they are close to each other, i.e., Cb = A ± α and C = A (α is small to such an extent that no thermal stress occurs). Consequently, the shaping plate 106 and three-dimensional laminated and shaped object 130 have equal thermal expansion coefficients or close thermal expansion coefficients (a difference between them is equal to or smaller than a predetermined value). Therefore, there is no difference between the shrinkage factors during cooling, so the shaping plate 106 and three-dimensional laminated and shaped object 103 cool and solidify without pulling each other.

Accordingly, the shaping plate 106 and three-dimensional laminated and shaped object 130 have only small differences between the degrees of expansion and shrinkage. This suppresses damage to the three-dimensional laminated and shaped object 130 after the three-dimensional laminated and shaped object 130 has completely cooled and solidified (at room temperature).

Note that in this embodiment, the shaping base material has been explained by taking the shaping plate 106 as an example, but the shaping base material is not limited to this and may also be, e.g., another three-dimensional laminated and shaped object. That is, the technique of this embodiment is applicable even when shaping a three-dimensional laminated and shaped object on a given product or part.

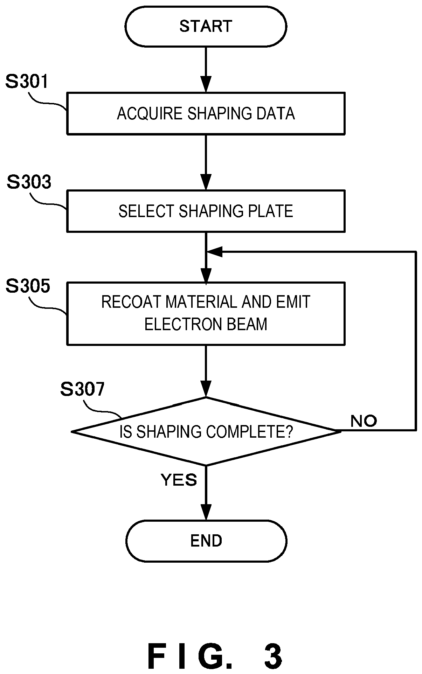

Fig. 3 is a flowchart for explaining the procedure of the three-dimensional laminating and shaping apparatus 100 according to this embodiment. In step S301, the three-dimensional laminating and shaping apparatus 100 acquires shaping data of the three-dimensional laminated and shaped object 130. In step S303, the three-dimensional laminating and shaping apparatus 100 selects the shaping plate 106 having a thermal expansion coefficient which is equal to that of the three-dimensional laminated and shaped object 130 or by which the difference between them is equal to or smaller than a predetermined value. In step S305, the three-dimensional laminating and shaping apparatus 100 recoats the material of the three-dimensional laminated and shaped object 130 on the shaping plate 106, and irradiates the recoated material with the electron beam 121. In step S307, the three-dimensional laminating and shaping apparatus 100 determines whether shaping of the three-dimensional laminated and shaped object 130 is complete. If the three-dimensional laminating and shaping apparatus 100 determines that shaping is not complete (NO in step S307), the three-dimensional laminating and shaping apparatus 100 repeats the steps from step S305. If the three-dimensional laminating and shaping apparatus 100 determines that shaping is complete (YES in step S307), the three-dimensional laminating and shaping apparatus 100 terminates the process.

This embodiment can effectively suppress a decrease in shaping accuracy based on the difference between the thermal expansion coefficients of a three-dimensional laminated and shaped object and shaping plate, thereby reducing damage to the three-dimensional laminated and shaped object. It is also possible to effectively suppress a defect and thermal strain caused by the difference between the thermal expansion coefficients.

### [Second Embodiment]

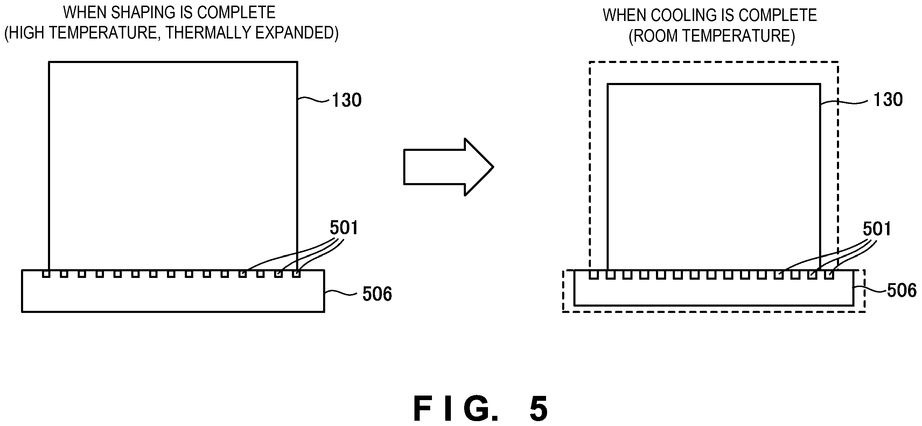

Next, a three-dimensional laminated and shaped object to be shaped by a three-dimensional laminating and shaping apparatus according to the second embodiment of the present invention will be explained with reference to Fig. 5. In the three-dimensional laminating and shaping apparatus of this embodiment, grooves are engraved on the surface of a shaping plate 506 as a shaping base material, i.e., projections and recesses are formed on the surface of the shaping plate 506. In addition, the projections and recesses on the surface of the shaping plate 506 are formed on a surface on which a three-dimensional laminated and shaped object 130 is laminated and shaped, i.e., on the upper surface of the shaping plate 506.

Note that the shape of the projections and recesses formed on the surface of the shaping base material (shaping plate 506) is not limited to the groove shape, and may also be a wave-like shape or zigzag shape.

In this embodiment, the projections and recesses are formed on the shaping plate surface, so it is possible to reduce stress acting on a three-dimensional laminated and shaped object as the shaping plate expands and shrinks. This makes it possible to suppress a defect and thermal strain. It is also possible to reduce damage to the three-dimensional laminated and shaped object. In addition, it is possible to suppress a decrease in shaping accuracy based on the difference between the thermal expansion coefficients of the three-dimensional laminated and shaped object and shaping plate. Furthermore, a defect and thermal strain caused by the difference between the thermal expansion coefficients can be suppressed.

### [Third Embodiment]

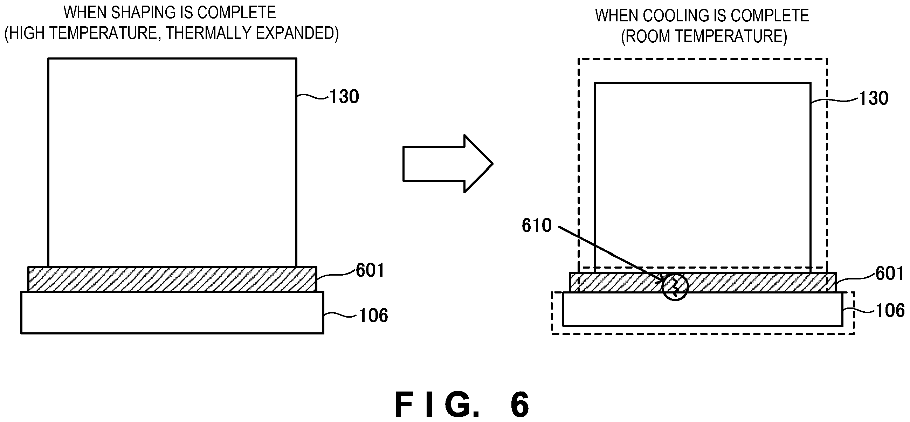

A three-dimensional laminated and shaped object to be shaped by a three-dimensional laminating and shaping apparatus according to the third embodiment of the present invention will be explained below with reference to Fig. 6. In the three-dimensional laminating and shaping apparatus according to this embodiment, a shaping plate 106 as a shaping base material and a three-dimensional laminated and shaped object 130 are made of different materials. Also, an interlayer is formed between the shaping plate 106 as a shaping base material and the three-dimensional laminated and shaped object 130. That is, this embodiment has an arrangement in which another shaping plate 601 is formed as an interlayer on the upper surface of the shaping plate 106.

The shaping plate 601 as an interlayer is formed in order to prevent a defect or the like in the three-dimensional laminated and shaped object 130 due to the difference in expansion and shrinkage between the shaping plate 106 and three-dimensional laminated and shaped object 130. Even if a defect occurs, this defect forms in the shaping plate 601 as an interlayer, thereby preventing the defect caused by the influence of thermal stress from occurring in the three-dimensional laminated and shaped object 130. Note that the shape of the shaping plate 601 as an interlayer can be a flat plate shape, but may also be a lattice shape. For example, if thermal stress occurs when the shaping plate 601 has a lattice shape, it is possible to let only a portion where the thermal stress has occurred be broken. Consequently, the influence of thermal stress on the three-dimensional laminated and shaped object 130 can be reduced.

This embodiment can reduce the influence of thermal stress on the three-dimensional laminated and shaped object because the interlayer is formed. It is also possible to suppress a decrease in shaping accuracy based on the difference in thermal expansion coefficient between the three-dimensional laminated and shaped object and shaping plate. Furthermore, a defect and thermal strain caused by the difference between the thermal expansion coefficients can be suppressed.

### [Fourth Embodiment]

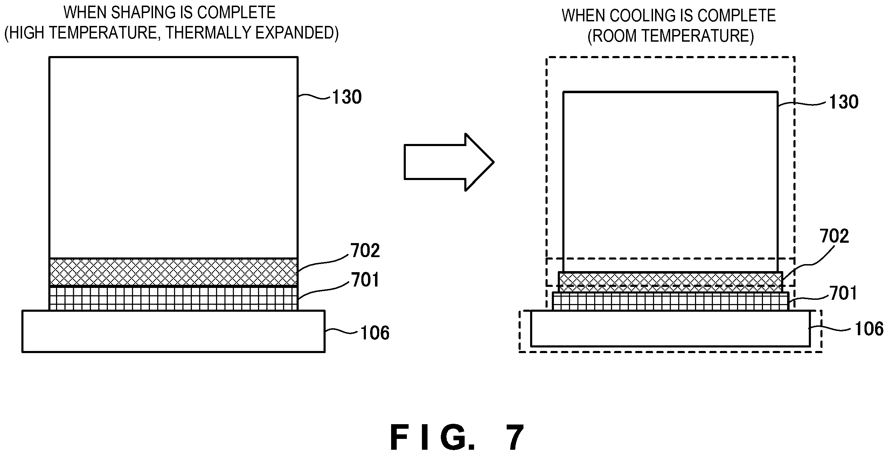

A three-dimensional laminated and shaped object to be shaped by a three-dimensional laminating and shaping apparatus according to the fourth embodiment of the present invention will be explained below with reference to Fig. 7. In the three-dimensional laminating and shaping apparatus according to this embodiment, a plurality of interlayers are formed between a shaping base material 106 and a three-dimensional laminated and shaped object 130. That is, when the thermal expansion coefficients of the shaping plate 106 and three-dimensional laminated and shaped object 130 are largely different, the plurality of interlayers are formed to gradually reduce the influence of thermal stress conducted from the shaping plate 106 to the three-dimensional laminated and shaped object 130.

For example, let A be the thermal expansion coefficient of the three-dimensional laminated and shaped object 130, and B be the thermal expansion coefficient of the shaping plate 106. In this case, the thermal expansion coefficient of a shaping plate 701 as an interlayer right above the shaping plate 106 is set at B ± α which is close to the shaping plate 106, and the thermal expansion coefficient of a shaping plate 702 on the shaping plate 701 is set at A ± α which is close to the three-dimensional laminated and shaped object 130. Note that a thermal expansion coefficient α is so small that no thermal stress occurs.

Even when thermal stress occurs in this arrangement, this thermal stress is gradually reduced because the shaping plates 701 and 702 exist between the shaping plate 106 and three-dimensional laminated and shaped object 130. This makes it possible to decrease the thermal stress to be finally applied to the three-dimensional laminated and shaped object 130.

In this embodiment, even when the thermal expansion coefficients of the shaping plate and three-dimensional laminated and shaped object are largely different, the influence of thermal stress on the three-dimensional laminated and shaped object can gradually be reduced because the plurality of interlayers are formed. This finally makes it possible to suppress the occurrence of damage to the three-dimensional laminated and shaped object. It is also possible to suppress a decrease in shaping accuracy based on the difference in thermal expansion coefficient between the three-dimensional laminated and shaped object and shaping plate. Furthermore, a defect and thermal strain caused by the difference between the thermal expansion coefficients can be suppressed.

### [Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

## Claims

1. A three-dimensional laminating and shaping apparatus comprising:
a material recoater that recoats a material of a three-dimensional laminated and shaped object;
an electron gun that generates an electron beam; and
a shaping base material on which the three-dimensional laminated and shaped object is to be shaped,
wherein thermal expansion coefficients of said shaping base material and the three-dimensional laminated and shaped object are equal or have a difference not more than a predetermined value.

2. The three-dimensional laminating and shaping apparatus according to claim 1, wherein when said shaping base material and the three-dimensional laminated and shaped object are made of different materials and have different thermal expansion coefficients, at least one interlayer having a thermal expansion coefficient intermediate between the thermal expansion coefficients of said shaping base material and the three-dimensional laminated and shaped object is formed between said shaping base material and the three-dimensional laminated and shaped object.

3. The three-dimensional laminating and shaping apparatus according to claim 1 or 2, wherein projections and recesses are formed on a surface of said shaping base material.

4. The three-dimensional laminating and shaping apparatus according to claim 3, wherein the projections and recesses on the surface of said shaping base material have one of a groove shape and a wave-like shape.

5. The three-dimensional laminating and shaping apparatus according to any one of claims 1 to 4, wherein said shaping base material comprises a flat shaping plate.

6. The three-dimensional laminating and shaping apparatus according to claim 5, wherein a material of the shaping plate comprises stainless steel.

7. A three-dimensional laminating and shaping apparatus control method comprising:
causing a material recoater to recoat a material of a three-dimensional laminated and shaped object; and
causing an electron gun to generate an electron beam, thereby shaping the three-dimensional laminated and shaped object on a shaping base material,
wherein thermal expansion coefficients of the shaping base material and the three-dimensional laminated and shaped object are equal or have a difference not more than a predetermined value.

8. A three-dimensional laminating and shaping apparatus control program for causing a computer to execute a method, comprising:
causing a material recoater to recoat a material of a three-dimensional laminated and shaped object; and
causing an electron gun to generate an electron beam, thereby shaping the three-dimensional laminated and shaped object on a shaping base material,
wherein thermal expansion coefficients of the shaping base material and the three-dimensional laminated and shaped object are equal or have a difference not more than a predetermined value.
